Europäisches Patentamt

(19) European Patent Office

Office européen des brevets

(11) EP 0 815 056 B1

(12) EUROPEAN PATENT SPECIFICATION

(45) Date of publication and mention
of the grant of the patent:
08.12.1999 Bulletin 1999/49

(21) Application number: 96906707.3

(22) Date of filing: 22.03.1996

(51) Int. Cl.$^6$: C01G 49/06

(86) International application number:
PCT/DK96/00115

(87) International publication number:
WO 96/29288 (26.09.1996 Gazette 1996/43)

(54) METHOD OF PRODUCING ALPHA-HEMATITE HYDRATE FROM GALVANISING SLUDGE

VERFAHREN ZUR HERSTELLUNG VON ALPHA-HERMATIT-HYDRAT AUS
GALVANISIERUNGSSCHLAMM

PROCEDE DE PRODUCTION D'ALPHA-HEMATITE HYDRATEE A PARTIR DE BOUE DE
GALVANISATION

(84) Designated Contracting States:
AT BE CH DE ES FR GB IT LI NL SE

(30) Priority: 22.03.1995 DK 29595

(43) Date of publication of application:
07.01.1998 Bulletin 1998/02

(73) Proprietor: Burgaard, Chresten
6950 Ringkobing (DK)

(72) Inventor: Burgaard, Chresten
6950 Ringkobing (DK)

(74) Representative:
Christiansen, Ejvind et al
c/o Hofman-Bang & Boutard, Lehmann & Ree
A/S,
Hans Bekkevolds Allé 7
2900 Hellerup (DK)

(56) References cited:
GB-A- 1 132 440          GB-A- 1 221 434
GB-A- 2 059 410

## Description

The present invention concerns a method of treating ferric oxide and/or ferric hydroxide hydrate containing flux liquid, flux liquid slurry or flux liquid slurry filter cake originating from a hot zincing process.

Hot zincing is a process which is widely used in the plating industry for the zincing of metal objects (frequently iron or steel objects), and which comprises immersing the metal object into a zinc melt. Prior to being immersed into the zinc melt, the metal object is treated by being passed through a pickling bath, optionally a flushing bath and a flux bath in said order.

In the pickling bath which consists of diluted hydrochloric acid (typically 6-14%), metal oxides and metal, in particular iron oxides and iron, are dissolved from the surface of the object. In the flushing bath, the object is flushed with water with a view to removing entrained liquid from the pickling bath. The flux bath consists of a diluted hydrochloric or nitric aqueous solution containing zinc and ammonium ions.

In processes of this type, metal ions are inevitably entrained from the pickling bath to the flushing bath and from there to the flux bath, which causes the metal concentration in the flux bath to be gradually increased. When an object is carried from the flux bath to the zinc melt, metal ions, in particular iron ions, are entrained to the melt. When the metal objects are transported from one bath to another bath, liquid in the order of 2.5 litres per ton of goods is entrained. The entrained iron ions are reduced to free iron in the zinc melt. This results in the formation of hard zinc, a zinc/iron alloy containing about 6% iron, which sinks to the bottom in the melt, and thereby an increased zinc consumption. In addition to the increase in the zinc consumption caused by the formation of hard zinc owing to the zinc used for this, the zinc consumption is increased because of an increase in the viscosity of the zinc melt. Formation of hard zinc has the further disadvantage that the quality of the zinced object deteriorates, unless the hard zinc is constantly removed from the melt.

Normally, some manufacturers accept an iron content in the flux liquid of up to 8-11 g/l. It has been found that in optimum operation it is possible to keep the iron content at a value of 0.5-1.5 g/l by continuously removing a subflow from the flux bath, performing complete iron removal from this subflow and recirculating the cleaned subflow to the flux bath. If the iron content in the flux liquid is kept at a level below about 1.5 g/l, the problem of hard zinc formation is considerably diminished or eliminated completely.

Cleaning of the subflow is usually performed by first passing it to a reactor in which the $Fe^{2+}$ ions present in the flux liquid are oxidized with hydrogen peroxide in accordance with the following reaction scheme:

$$2Fe^{2+} + H_2O_2 \rightarrow 2Fe^{3+} + 2OH$$

The pH value of the reaction mixture is maintained during the oxidation in the range 4.2-4.8 by ammonia addition. This results in precipitation of ferric oxide and/or ferric hydroxide hydrate.

The resulting ferric oxide and/or ferric hydroxide hydrate suspension is called "flux liquid slurry" below. Passage of the suspension through a separator and optionally a press results in the formation of a flux liquid filter cake that can be collected, and a clear, essentially iron-free liquid that can be recirculated to the flux bath, optionally after adjustment of salt content and pH value.

Flux liquid slurry and flux liquid slurry filter cakes substantially consist of water, ferric oxide and/or ferric hydroxide hydrate as well as zinc and ammonium salts, but may also contain other heavy metals originating from the goods, such as lead, chromium and cadmium.

Metal slurry containing heavy metals are usually disposed of by being dumped at special dumps for the reception of such waste. Dumping in these dumps is usually dependent on compliance with a requirement with respect to the upper limit of the water solubility of the contained metal salts at a pH value of about 9. It has been found that this requirement cannot be met for waste based on flux liquid slurry and flux liquid slurry filter cakes, as the simultaneous presence of zinc and ammonium causes formation of complex compounds which do not precipitate at a pH value of 9.

Accordingly, so far it has been necessary either to combust waste based on flux liquid slurry and flux liquid slurry filter cakes, thereby considerably increasing the costs of disposal in relation to dumping, or to dump the waste in countries without or with very low environmental requirements with the resulting unfortunate environmental consequences.

An object of the present invention is to provide a method of treating flux liquid slurry or flux liquid slurry filter cakes for producing alpha-hematite hydrate, which is both simple and economically advantageous.

It has now surprisingly been found that flux liquid slurry and flux liquid slurry filter cakes may be used as starting materials for the production of alpha-hematite hydrate.

Thus, the present invention concerns a method of treating ferric oxide and/or ferric hydroxide hydrate containing flux liquid slurry or flux liquid slurry filter cakes originating from a hot zincing process, said method being characterized by heating the flux liquid slurry or the flux liquid slurry filter cake, optionally after dilution with water or flux liquid, to form crystals of alpha-hematite hydrate which are then separated.

Alpha-hematite hydrate is a crystalline substance having a clear red colour which is widely used as a pigment in the paint industry. Natural or synthetic alpha-hematite hydrate products of relatively low purity (about 80%) frequently have a yellowish tinge. Products of this type are thus less suitable for use in paints, but are instead used for the dyeing of products with no strict colour quality requirements, such as cement and concrete.

Alpha-hematite has previously been produced synthetically from $Fe(OH)_3$. The known processes proceed from substantially pure compounds.

JP Patent Specification No. 3 223 121 describes a method of producing fine-grained hematite particles at low temperatures, wherein powdered iron oxide hydrate or ferric hydroxide is heated in the presence of ammonium chloride to a temperature in the range 180-250 °C. The resulting hematite particles are stated to be suitable as coating pigments, dyes for rubber and plastics, cosmetic pigments and UV absorbers.

EP Patent Specification No. 237 944 describes a process for producing needle-shaped alpha-$Fe_2O_3$, wherein a alkaline, aqueous suspension of $Fe(OH)_3$ is heated to a temperature in the range 80-250 °C in the presence of organic compounds forming complexes with $Fe^{3+}$ ions and in the presence of $Sn^{4+}$ ions. The resulting alpha-$Fe_2O_3$ product is suitable as a starting material for the production of needle-shaped gamma-$Fe_2O_3$ or metallic Fe, which are products used in the production of magnetic tapes.

Thus, the method of the invention allows disposal of flux liquid slurry and flux liquid slurry filter cakes in an economically advantageous manner, and it has moreover been found that an alpha-hematite hydrate product having a very high purity ($\geq$ 99%), very good grinding properties and a uniform particle size may be obtained. The product obtained moreover has a very high colour quality. Thus, no occurrence of visible colour shades within the individual batch of the product has been observed, and no variations in the colour from batch to batch have been observed. The product achieved by the method of the invention thus lends itself extremely well for use as a pigment in paints.

The filtrate which occurs after the separation of alpha-hematite hydrate may be collected and used again as flux liquid (optionally after adjustment of the concentrations of the salts present in the filtrate), which additionally contributes to the profitability of the method of the invention.

The method of the invention may be performed both continuously, semi-continuously, discontinuously and batch-wise.

With a view to converting the ferric oxide and/or ferric hydroxide hydrate present in the flux liquid slurry or the flux liquid slurry filter cake into alpha-hematite hydrate, the flux liquid slurry or flux liquid slurry filter cake optionally diluted with water or flux liquid is preferably heated to a temperature in the range 105-225 °C, in particular 135-175 °C.

Many different heating methods may be used in the method of the invention. Examples of suitable heating methods include direct heating methods, such as steam injection, and indirect heating methods, such as heat exchange.

The time span in the performance of the method from the moment when the selected process temperature is achieved until the heating is interrupted, is called "residence time" below. The residence time may be varied within a wide range, and the selected residence time depends on the heating method and rate, on the process temperature, on the pH value and on the desired crystal size of the alpha-hematite hydrate product.

It has been found that shorter residence times are usually required with direct heating methods than with indirect heating methods. It has moreover been found that the higher the temperature used, the shorter the required residence time, and vice versa.

Preferably, a residence time of 5-300 s, in particular 20-240 s, is used with directed heating methods. Preferably, a residence time of 1-240 min, in particular 2-120 min, is used with indirect heating methods.

The residence time used is selected in dependence on i.a. the desired crystal size of the product, said crystal size increasing as a function of the residence time. Thus, the method of the invention allows adjustment of the crystal size of the product. Usually, it is intended to achieve a crystal size of the order of 50-200 nm. Although the crystal size is thus generally very small, the alpha-hematite product may nevertheless be separated by standard methods, such as filtration, since the product is present in an agglomerated state.

The pH value at which the method of the invention is performed, is a parameter which greatly influences the crystal size homogeneity and the colour quality of the finished product. Preferably, a pH value is used within the range 3-7, more preferably 4-6, in particular 4-5.

In a preferred embodiment of the invention the method comprises the following steps:

a) adjustment of the pH value of ferric oxide and/or ferric hydroxide hydrate containing flux liquid slurry or flux liquid slurry filter cake, optionally diluted with water and/or flux liquid, to a value in the range 4-5,

b) heating to form alpha-hematite hydrate,

c) filtration of the resulting alpha-hematite hydrate,

d) flushing of the filtered alpha-hematite hydrate with water, and

e) optionally drying and/or calcination of the alpha-hematite hydrate.

The invention will be described more fully below with reference to the drawings, in which

fig. 1 is a process block diagram illustrating a preferred embodiment of the method of the invention,

fig. 2 is a sketch illustrating a particularly preferred embodiment of the method of the invention.

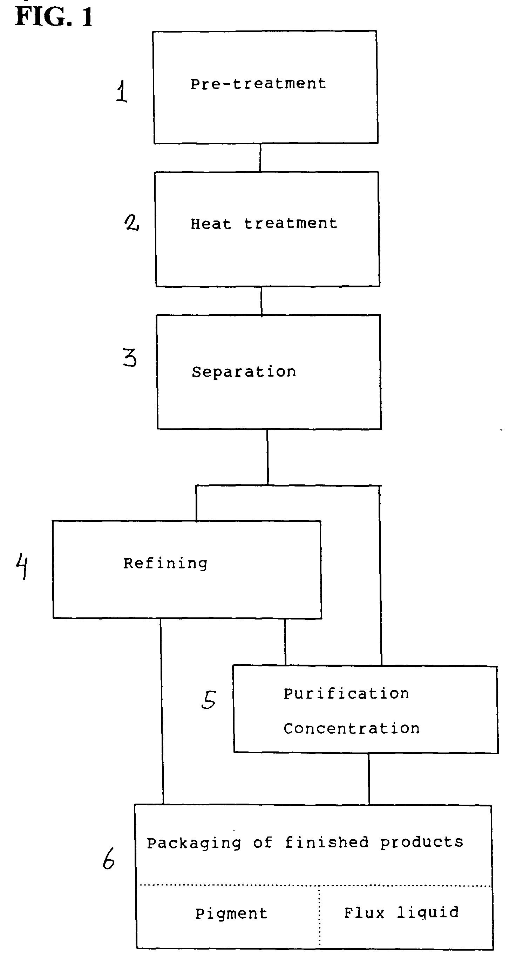

The process outlined in fig. 1 first comprises pre-treatment (1) of the flux liquid slurry or the flux liquid slurry filter cake in the form of adjustment of the pH value optionally after dilution with water and/or flux liquid. Then, the pre-treated material is heat-treated (2) to form alpha-hematite hydrate. After the heat treatment the alpha-hematite hydrate crystals are separated (3), and these crystals are refined (4) by flushing with water optionally followed by drying or calcination. The liquid remaining after the separation (3) is combined with the flushing water used in the refining operation (4), and the pH value and salt content of the resulting liquid are adjusted (5) to values usual for flux liquid. Then, the alpha-hematite hydrate is packaged as a pigment product ready for sale, and the liquid formed in the process is packaged (6) as flux liquid ready for use.

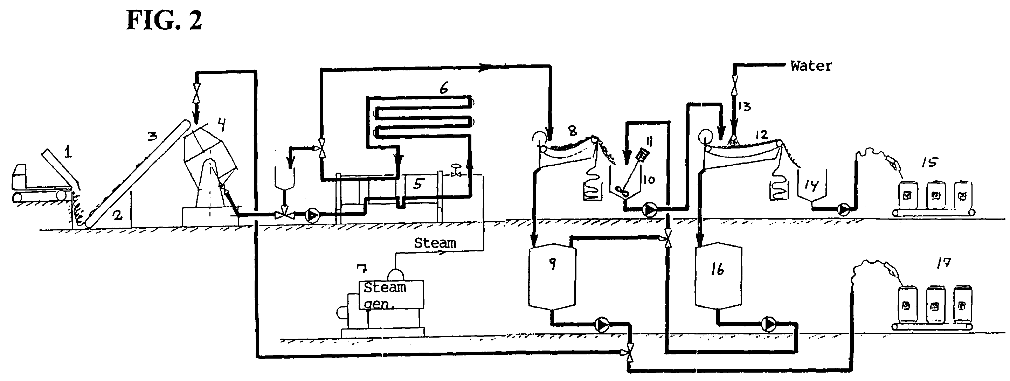

In the embodiment outlined in fig. 2, filter cake is discharged from a conveyor means (1) into a receiving tank (2). The filter cake is fed from there via a conveyor belt (3) into a mixer (4) in which it is mixed with liquid to form a pumpable mass. The mass is then pumped via a heat exchanger (5) into a heating unit (6) which is heated to the desired temperature by the supply of steam from the steam generator (7). The conversion of ferric oxide and/or ferric hydroxide hydrate into alpha-hematite hydrate takes place in the heating unit (6). After the heating unit (6), the mass is again fed into the heat exchanger (5). Thus, heat exchange takes place between the mass being fed into the heating unit (6) and the mass being discharged from the heating unit (6). This provides pre-heating of the mass before it is fed into the heating unit (6), and also cooling of the mass which is discharged from the heating unit (6). The mass is then fed from the heat exchanger (5) to a band filter (8) on which excess liquid runs off and is collected in the collection container (9). The remaining mass consisting of wet alpha-hematite hydrate is fed with the band filter (8) to a vessel (10) provided with a stirrer (11). The vessel (10) is supplied with liquid under stirring with a view to separating agglomerated particles. The mass is then pumped out on another band filter (12) which is irrigated with tap water (13) to flush the alpha-hematite hydrate crystals. The band filter terminates at a store (14) in which the alpha-hematite hydrate product is placed and stored until it is to be packaged (15).

The tap water used for the flushing is fed into the collection container (16). From there, it is pumped into the collection container (9) apart from a subflow which is fed into the vessel (10). The liquid is fed from the collection container (9) to packaging (17) apart from a sub-flow which is fed into the mixer (4).

The invention will be illustrated more fully below by a test example.

EXAMPLE

Flux liquid slurry filter cake originating from a hot zincing process and of the following approximate composition

| | |
|---|---|
| $ZnCl_2$: | 15% by weight |
| $NH_4Cl$: | 15% by weight |
| ferric hydroxide hydrate: | 16% by weight |
| water: | the rest |

was diluted with water to provide a thin mass having a solids content of about 10% by weight. A 400 mm long down pipe having a diameter of 18 mm was filled to half its capacity with said mass. The down pipe was secured to a heating member by which the mass was heated within about 5 minutes to the desired temperature, which was maintained for the selected residence time. The mass was then cooled within 2-3 minutes, removed from the down pipe, filtered, washed with water and air-dried at a temperature of below 100 °C. The purity and the crystallite size of the product obtained were determined by X-ray diffraction.

7 tests were performed, using a pH value in the range 4.2-4.8 and the treatment temperature and residence time values listed in the table below.

Table

| Test No. | Temperature (°C) | Residence time (min) | Average crystallite size, $D^{024}$ (Å) |
|---|---|---|---|
| 1 | 125 | 240 | 530 |
| 2 | 145 | 5 | 830 |
| 3 | 145 | 10 | 1400 |
| 4 | 150 | 4 | 830 |
| 5 | 150 | 60 | 1400 |
| 6 | 210 | 2 | 830 |
| 7 | 210 | 30 | 1300 |

Analyses showed that all the tests stated in the table resulted in alpha-hematite products having a purity of above 99%.

Further, the colour quality of all the products obtained was very high, as the products had a clear red colour and a high uniformity of colour.

The iron content of the filtered liquid was so low in all tests that it could not be detected by generally known techniques for inorganic qualitative analysis.

## Claims

1. A method of treating ferric oxide and/or ferric hydroxide hydrate containing flux liquid slurry or flux liquid slurry filter cakes originating from a hot zincing process, **characterized** by heating the flux liquid slurry or the flux liquid slurry filter cake, optionally after dilution with water or flux liquid, to form crystals of alpha-hematite hydrate which are then separated, said flux liquid slurry or the flux liquid slurry filter cake having a pH value of 3-7 prior to the step of heating.

2. A method according to claim 1, **characterized** by heating to a temperature in the range 105-225 °C, in particular 135-175 °C.

3. A method according to claim 1 or 2, **characterized** by performing direct heating for a period of time of 5-300 s, preferably 20-240 s.

4. A method according to claims 1-3, **characterized** by performing indirect heating for a period of time of 1-240 min, preferably 2-120 min.

5. A method according to claims 1-4, **characterized** by adjusting the pH value of the ferric oxide and/or ferric hydroxide hydrate containing flux liquid, flux liquid slurry or flux liquid slurry filter cake, optionally diluted with water or flux liquid, to a pH value in the range 4-6, preferably 4-5, prior to heating.

6. A method according to claims 1-5, **characterized** by filtering the crystals of alpha-hematite hydrate and flushing them with water, optionally followed by drying and/or calcination steps.

## Patentansprüche

1. Verfahren zur Behandlung von Eisenoxid- und/oder Eisenhydroxidhydrat-enthaltendem Flußmittelflüssigschlamm oder Flußmittelflüssigschlamm-Filterkuchen, die aus einem Feuerverzinkungsverfahren hervorgehen, gekennzeichnet durch das Erwärmen des Flußmittelflüssigschlamms oder des Flußmittelflüssigschlamm-Filterkuchens, gegebenenfalls nach der Verdünnung mit Wasser oder Flußmittelflüssigkeit, um α-Hämatithydrat-Kristalle zu bilden, die anschließend abgetrennt werden, wobei der Flußmittelflüssigschlamm oder der Flußmittelflüssigschlamm-Filterkuchen einen pH-Wert von 3 bis 7 vor dem Schritt des Erwärmens aufweist.

2. Verfahren nach Anspruch 1, gekennzeichnet durch das Erwärmen auf eine Temperatur im Bereich von 105 bis 225 °C, insbesondere von 135 bis 175 °C.

3. Verfahren nach Anspruch 1 oder 2, gekennzeichnet durch die Ausführung einer direkten Erwärmung für eine Zeitdauer von 5 bis 300 s, vorzugsweise 20 bis 240 s.

4. Verfahren nach den Ansprüchen 1 bis 3, gekennzeichnet durch die Ausführung einer indirekten Erwärmung für eine Zeitdauer von 1 bis 240 min, vorzugsweise 2 bis 120 min.

5. Verfahren nach den Ansprüchen 1 bis 4, gekennzeichnet durch die Einstellung des pH-Werts der Eisenoxid- und/oder Eisenhydroxidhydrat-enthaltenden Flußmittelflüssigkeit, des Flußmittelflüssigschlamms oder des Flußmittelflüssigschlamm-Filterkuchens, gegebenenfalls verdünnt mit Wasser oder Flußmittelflüssigkeit, auf einen pH- Wert im Bereich von 4 bis 6, vorzugsweise 4 bis 5, vor dem Erwärmen.

6. Verfahren nach den Ansprüchen 1 bis 5, gekennzeichnet durch das Filtern der $\alpha$-Hämatithydrat-Kristalle und das Spülen von diesen mit Wasser, gegebenenfalls gefolgt von Trocknungs- und/oder Kalzinierungsschritten.

**Revendications**

1. Procédé de traitement de gâteaux de boues liquides de fondant ou de gâteaux de filtres issus de boues liquides de fondant, contenant des hydrates d'oxyde ferrique ou des hydrates d'hydroxyde ferrique, provenant d'un processus industriel de galvanisation dans un bain en fusion, caractérisé par un chauffage du gâteau de boue liquide de fondant ou du gâteau de filtre issu d'une boue liquide de fondant, facultativement après dilution avec de l'eau ou un liquide de fondant, pour former des cristaux d'hydrate d'alpha-hématite qui sont ensuite séparés, ledit gâteau de boue liquide de fondant, ou le gâteau de filtre issu d'une boue liquide de fondant, ayant une valeur de pH allant de 3 à 7 préalablement à l'étape de chauffage.

2. Procédé selon la revendication 1, caractérisé par une étape de chauffage jusqu'à une température comprise dans l'intervalle allant de 105 à 225°C, en particulier 135 à 175° C.

3. Procédé selon la revendication 1 ou 2, caractérisé par une étape consistant à effectuer un chauffage direct pendant une durée de 5 à 300 s., de manière préférée de 20 à 240 s.

4. Procédé selon la revendication 1 à 3, caractérisé par une étape consistant à effectuer un chauffage indirect pendant une durée de 1 à 240 mn, de manière préférée de 2 à 120 mn.

5. Procédé selon les revendications 1 à 4, caractérisé par un ajustement de la valeur de pH du gâteau de boue liquide de fondant ou du gâteau issu de la boue liquide de fondant contenant des hydrates d'oxyde ferrique et/ou d'hydroxyde ferrique, facultativement dilués avec de l'eau ou un liquide de fondant, à une valeur de pH comprise dans l'intervalle allant de 4 à 6, de préférence 4 à 5, préalablement au chauffage.

6. Procédé selon les revendications 1 à 5, caractérisé par un filtrage des cristaux d'hydrate d'alpha-hématite et leur rinçage avec de l'eau, facultativement suivis par des étapes de séchage et/ou de calcination.

## FIG. 1

```
 1    ┌──────────────────┐
      │  Pre-treatment   │
      └──────────────────┘
              │
 2    ┌──────────────────┐
      │  Heat treatment  │
      └──────────────────┘
              │
 3    ┌──────────────────┐
      │   Separation     │
      └──────────────────┘
              │
 4 ┌──────────────────┐
   │    Refining      │
   └──────────────────┘
```

5 Purification Concentration

6 Packaging of finished products

Pigment | Flux liquid

FIG. 2